# FASCICULE DE BREVET EUROPEEN

(11) **EP 3 415 732 B1**
(45) Date de publication et mention de la délivrance du brevet: **05.08.2020**
(21) Numéro de dépôt: 18305597.9
(22) Date de dépôt: 15.05.2018
(51) Int. Cl.: F01N 3/20, F01N 3/28, F01N 13/14, F28D 20/02, F01N 3/10, F28D 20/00

(54) **SYSTÈME CATALYTIQUE DE TRAITEMENT DE GAZ D'ÉCHAPPEMENT DE VÉHICULE HYBRIDE COMPORTANT DES MOYENS DE STOCKAGE DE LA CHALEUR**
KATALYTISCHES ABGASNACHBEHANDLUNGSSYSTEM MIT WÄRMESPEICHERMITTEL FÜR EIN HYBRIDFAHRZEUG
CATALYTIC EXHAUST GAS TREATMENT SYSTEM COMPRISING HEAT STORAGE MEANS FOR HYBRID VEHICLE

(30) Priorité: 16.06.2017 FR 1755486
(43) Date de publication de la demande: 19.12.2018
(73) Titulaire: IFP Energies nouvelles, 92852 Rueil-Malmaison Cedex (FR); Peugeot Citroën Automobiles SA, 78140 Vélizy-Villacoublay (FR); Renault S.A.S., 78288 Guyancourt Cedex (FR)
(72) Inventeur: LE BERR, Fabrice, 92500 RUEIL MALMAISON (FR); LEFEBVRE, Xavier, 78700 CONFLANS SAINTE HONORINE (FR); DABADIE, Jean-Charles, 92500 RUEIL MALMAISON (FR); DAMJANOVIC LE BALEUR, Slavitsa, 91730 CHAMARANDE (FR); SOUIDI, Faycal, 92600 ASNIERES (FR); YARCE, Alejandro, 92700 COLOMBES (FR)
(74) Mandataire: IFP Energies nouvelles

(56) Documents cités:
- DE-A1-102004 052 106
- DE-A1-102008 040 451
- GB-A- 1 395 960
- US-A1- 2003 017 086
- US-A1- 2015 283 504

## Description

La présente invention se situe dans le domaine des systèmes de traitement catalytiques des gaz d'échappement d'un moteur à combustion. En particulier, l'invention concerne des systèmes de contrôle et d'optimisation de la température des moyens catalytiques de façon à optimiser leur fonctionnement.

L'hybridation des véhicules est reconnue comme un moyen prometteur de diminution des émissions de CO₂ permettant notamment l'arrêt et l'optimisation du fonctionnement du moteur thermique, tout en garantissant les besoins en énergie à bord grâce à l'énergie électrique disponible sur le véhicule, cette énergie étant soit récupérée "gratuitement" lors des phases de freinage, soit fournie par le moteur thermique ou le réseau électrique dans le cas des véhicules hybrides rechargeables (PHEV : pour « Plug-in Hybrid Electric Vehicles » ou HEV : pour « Hybrid Electric Vehicle » ). Le fonctionnement du moteur thermique de ce type de véhicule hybride se trouve donc fortement modifié par rapport au fonctionnement de véhicule conventionnel, en particulier avec la présence de phases d'arrêt/démarrage très fréquentes et des séquences en mode de fonctionnement purement électrique ZEV (pour « Zéro Emission Vehicle ») qui peuvent atteindre des durées importantes, allant jusqu'à plusieurs minutes. De ce fait, le système de dépollution sur ce type de véhicule présente un fonctionnement très différent de celui d'un véhicule conventionnel non hybridé impliquant une gestion, voire une conception et un dimensionnement spécifiques du système de dépollution catalytique dédié à ce type de véhicule. Ce fonctionnement différent se caractérise notamment par une réduction des émissions de polluants issues du moteur en fonctionnement hybride, mais qui s'accompagne d'un mauvais traitement des émissions de polluants en sortie du système de post-traitement liée à une utilisation particulière du post-traitement sur HEV/PHEV. Cette baisse d'efficacité du système catalytique de dépollution est notamment due à la thermique du système qui est moins favorable compte tenu du fait que le moteur thermique est plus souvent à l'arrêt. En effet les débits et les thermiques ne sont plus suffisants pour maintenir le système catalytique activé, ce dernier ayant besoin d'une certaine température minimum pour traiter les émissions polluantes. De plus, la gestion de la richesse peut être compliquée sur un moteur qui s'arrête et redémarre très régulièrement. De fait la fenêtre optimale de traitement des émissions polluantes du catalyseur qui se situe autour de la richesse 1 n'est plus respectée. Or, la gestion optimisée de la dépollution doit être prise en compte sur un véhicule hybride comme sur un véhicule classique dans le respect des réglementations définissant les cibles d'émissions polluantes (Hydrocarbures - HC, Oxyde d'azote - NOx, monoxyde de carbone - CO). Cette gestion des stratégies de dépollution se fait souvent au détriment de la consommation en carburant du véhicule et d'une augmentation des émissions de dioxyde de carbone (CO2) en g/km. Cela pénalise donc les avantages liés à l'utilisation d'un véhicule hybride. Par exemple, il peut être nécessaire de redémarrer plus régulièrement le moteur thermique pour augmenter le débit et la température des gaz d'échappements afin de maintenir en activité le catalyseur. Il apparait donc très utile de tenter d'optimiser un type de système de post-traitement afin d'atténuer l'impact de cette contrainte, notamment dans le cas particulier des PHEV/HEV qui ont un fonctionnement avec le moteur thermique à l'arrêt pouvant être problématique du point de vue du système de dépollution. Dans le cas des PHEV/HEV, il est nécessaire:
- d'empêcher/limiter le désamorçage du catalyseur pendant les phases de traction électrique,
- d'assurer un réamorçage rapide.

On connait des solutions techniques permettant de maintenir le catalyseur en température par le moyen d'un système de stockage de l'énergie réparti généralement sur l'ensemble du système catalytique. Par exemple, l'une de ces solutions techniques est basée sur l'utilisation d'une enveloppe à double paroi dans laquelle le vide est réalisé. Cette double enveloppe entoure le catalyseur, avec des soufflets et des rondelles de céramique à chaque extrémité pour y éliminer les pertes de chaleur. Ce système intègre environ 2 kg de matériau à changement de phase en anneau qui entoure le catalyseur. Le type de matériau et sa chaleur latente de fusion peuvent être ceux décrits dans le document US-6875407. Il est décrit que le système, une fois chauffé à 600°C, met plus de 24 heures pour se refroidir en dessous de 300°C, au lieu de 30 minutes pour un catalyseur non isolé. C'est-à-dire qu'il devrait être encore amorcé au démarrage suivant. En effet, selon une étude, l'intervalle entre deux démarrages à froid est inférieur à 24 heures dans 98% des cas.

On peut citer les documents suivants comme pouvant illustrer le domaine technique du système de la présente invention :
- US-5477676.
- US-5433056.
- US6875407.
- EP0596854A1.
- US2011016858A.
- US2009095158A.
- US-2011048388A.
- FR3002278
- GB 1 395 960 A
- DE 10 2004 052 106
- US 2003/ 017 086
- US 2015/283 504
- S. D. Burch, T. F. Potter, M. A. Keyser, M. J. Brady, and K. F. Michaels, "Reducing Cold-Stard Emissions by Catalytic Converter Thermal Management," SAE Technical Paper 950409, 1995.
- S. D. Burch, M. A. Keyser, C. P. Colucci, T. F. Potter, D. K. Benson, and J. P. Biel, "Applications and Benefits of Catalytic Converter Thermal Management," SAE Technical Paper 961134, 1996.
- S. D. Burch and J. P. Biel, "SULEV and "Off-Cycle" Emissions Benefits of a Vacuum-Insulated Catalytic Converter," SAE Technical Paper 1999-01-0461, 1999.
- E. Korin, R. Reshef, D. Tshernichovesky, and E. Sher, "Improving cold-start functioning of catalytic converters by using phase-change materials," SAE Technical Paper 980671, vol. 1353, pp. 43-50, 1998.
- E. Korin, R. Reshef, D. Tshernichovesky, and E. c. Sher, "Reducing cold-start emission from internai combustion engines by means of a catalytic converter embedded in a phase-change material,"
- G. Gaiser and C. Seethaler, "Zero-Delay Light-Off - A New Cold-Start Concept with a Latent Heat Storage Integrated into a Catalyst Substrate," SAE Technical Paper 2007-01-1074, 04 2007
- P. Botsaris, "An estimation of alternative mechanical design approaches for reducing cold start emissions from gasoline four-stroke cycle engines during the last decade," International Journal of Heat and Technology, vol. 28, no. 1, pp. 37-44, 2010.

Ainsi, la présente invention concerne un système catalytique de traitement des gaz d'échappement d'un véhicule, comportant un pain catalytique dans lequel circulent lesdits gaz, comportant au moins un insert de matériaux de stockage de la chaleur dans une zone en aval du pain, par rapport au sens de circulation des gaz, l'insert étant sensiblement au centre de la zone avale et caractérisé en ce que ledit insert est maintenu par un bouchon isolant ou un anneau isolant pour boucher le trou nécessaire à l'introduction dudit insert lors de la fabrication et pour limiter les échanges thermiques en aval du pain catalytique.

L'insert peut être cylindrique.

L'insert peut être un cylindre plein.

Un cylindre de matériaux de stockage de la chaleur peut se trouver à l'extérieur du pain, sensiblement de la même hauteur que ledit insert cylindrique.

Ledit pain peut comporter une couche de matériau isolant thermiquement sur l'extérieur.

Lesdits matériaux de stockage de la chaleur peuvent être des matériaux à changement de phase (MCP).

Lesdits matériaux de stockage de la chaleur peuvent comporter un mélange de matériaux à changement de phase (MCP).

Lesdits matériaux de stockage de la chaleur peuvent être sous la forme de nitrate de potassium ((KNO₃).

L'invention concerne également l'utilisation du système décrit ci-dessus, aux véhicules hybrides alternant de la motorisation en moteur à combustion avec de la motorisation à énergie alternative et réversible.

Selon l'utilisation, l'énergie alternative et réversible peut être électrique. On ne sortira pas de l'invention si l'énergie alternative et réversible est pneumatique, ou hydraulique.

Selon l'invention, l'énergie alternative est rechargeable, notamment sur le réseau si elle est électrique, ou à l'aide d'installations spécifiques dans les autres cas.

L'invention sera mieux comprise, et ses avantages apparaitront plus clairement à la lecture qui suit de la description d'exemples de réalisation, nullement limitatifs, et illustrés par les figures ci-après annexées, parmi lesquelles :
- les figures 1A et 1B montrent deux exemples de réalisation selon l'invention (cas A et cas B) ;
- la figure 2 montre une cartographie thermique calculée au bout de 1h25 de refroidissement pour le cas A ;
- la figure 3 montre une cartographie thermique calculée au bout de 1h25 de refroidissement pour le cas B.

Les mises en œuvre des systèmes présentés ci-après ont pour objectif de permettre l'optimisation du maintien en température du catalyseur sur ce type d'applications, notamment le traitement catalytique des gaz d'échappement d'un moteur de véhicule une fois la combustion réalisée des gaz d'échappement d'un moteur de véhicule. Il est néanmoins possible d'utiliser ce système sur d'autres motorisations, telles que des moteurs de bateaux, de deux-roues, ou de moteurs statiques).

Il est important de noter que l'état de la technique connu se rapporte à des systèmes pour lesquels les moyens de stockage de l'énergie thermique impliquent l'ensemble de la longueur du pain catalyseur. Les résultats de ces systèmes ont été obtenus après que le MCP (Matériau à Changement de Phase) ait été fondu. Pour un démarrage à froid intervenant après un délai suffisamment long pour que le MCP ait restitué toute l'énergie stockée, un délai d'amorçage particulièrement long est à attendre à cause de l'inertie importante de ce matériau de stockage. En effet, l'inertie thermique d'un matériau est généralement identique à la fusion et à la recristallisation. Il existe donc un compromis entre le gain apporté par la présence d'un MCP à l'état fondu dans le catalyseur lors d'un redémarrage et le retard à l'activation du catalyseur lors des démarrages à froid (MCP cristallisé). Ces systèmes ne sont opérationnels que s'ils sont capables de conserver l'énergie sur une longue durée, ce qui nécessite généralement une quantité de matériau de stockage conséquente, ce qui peut poser des problèmes en termes de volume, masse et coût pour une future intégration sur un véhicule mobile.

Selon la présente invention, les systèmes présentés ci-après ont pour objectif de ralentir la phase de refroidissement du catalyseur tout en impactant le moins possible la phase de mise en action du catalyseur (phase de « light-off ») durant laquelle tout ou partie du catalyseur va monter progressivement en température grâce à l'énergie calorifique apportée par les gaz d'échappement chauds, jusqu'à atteindre une température seuil (dite température de « light-off ») au-dessus de laquelle le catalyseur présente une bonne conversion catalytique des polluants (par définition, efficacité de conversion supérieure à 50% ou plus). Le système n'est pas opérationnel au premier démarrage (à froid) mais sa constitution n'est pas impactante par rapport à une phase de light-off réalisée avec une structure de catalyseur classique. Ceci permet notamment de minimiser la quantité de matériaux de stockage utilisée, ce qui a pour avantages certains de faciliter l'intégration dans le volume contraint du pain catalytique, limiter le poids et le coût.

Pour cela, et afin que les modifications apportées au système catalytique, et notamment l'ajout de matériaux de stockage de la chaleur, impactent le moins possible la phase de light-off, l'idée est de découper le pain catalytique en zones fonctionnelles, par rapport au sens de circulation des gaz d'échappement :
- La partie amont du pain qui est la zone la plus sollicitée lors de la phase de light-off, n'est pas, ou très peu modifiée. Ceci afin de ne pas ajouter d'inertie thermique supplémentaire dans cette zone qui pénaliserait les phases de démarrage.
- La partie avale du pain catalytique contient les moyens d'action pour ralentir la phase de refroidissement du système catalytique, notamment en intégrant un ou plusieurs éléments permettant le stockage d'énergie et la restitution lors des phases d'arrêts ou de fonctionnement à faible puissance (phases critiques pour la thermique du système catalytique).

La délimitation géométrique des zones fonctionnelles du système catalytique est basée sur une évaluation de la zone prioritairement utilisée au premier démarrage de fonctionnement du moteur, phase généralement réalisée à puissance limitée sur les cycles de conduite normalisés et en conditions d'usage réaliste, et qui n'utilise donc qu'une partie de la zone située en amont du catalyseur.

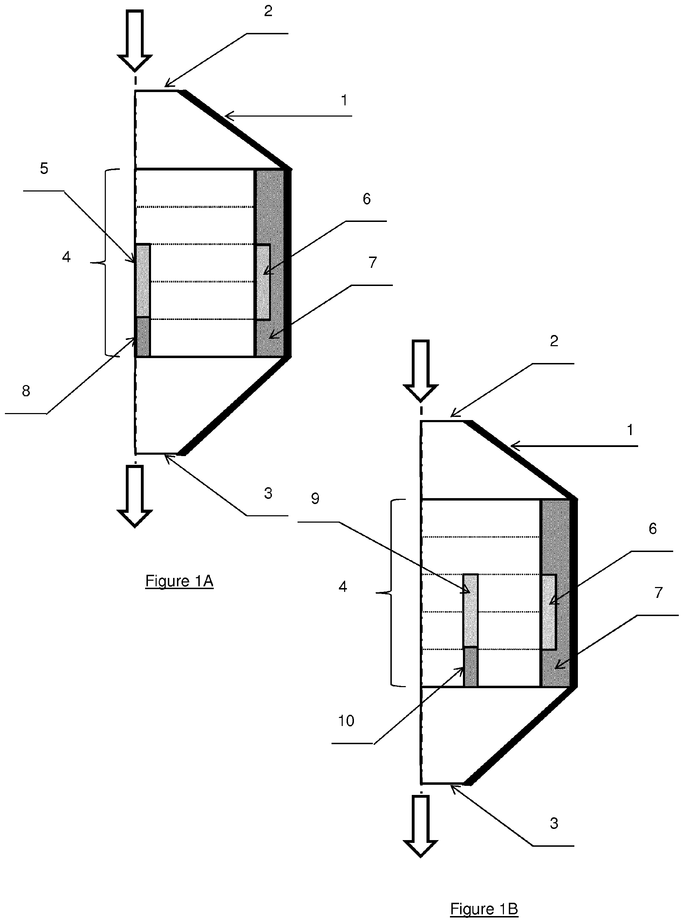

Deux cas de réalisation sont présentés sur les figure 1A et 1B.

Dans le premier cas A (figure 1A), le système catalytique de traitement de gaz d'échappement comprend une enveloppe 1 avec une entrée 2 de gaz d'échappement non traités et une sortie 3 de gaz d'échappement traités, et dans lequel est logé un pain catalytique 4. Ce pain est avantageusement en céramique de type cordiérite, carbure de silicium ou mullite ou des combinaisons de ces céramiques

Dans le cas de la figure 1A, un matériau de stockage MCP, ici sous forme de nitrate de potassium (KNO₃) mais qui peut également être un mélange de matériaux à changement de phase, est présent à deux endroits dans la partie avale du pain sous forme d'un insert 5, qui peut-être cylindrique creux ou plein, qui est placé sensiblement au centre et au cœur de la zone avale du pain catalytique 4 et sous forme d'un anneau 6 situé à l'extérieur du pain catalytique.

Une couche de matériau d'isolant 7, disposée autour du pain, isole thermiquement l'anneau 6 de matériau de stockage extérieur afin de ne pas dissiper l'énergie vers l'extérieur du catalyseur, et assure le maintien de l'ensemble.

L'insert et l'anneau sont présentes sur une longueur limitée dans la zone avale du pain catalytique. Ainsi, la zone avale du pain, grâce à l'énergie stockée et restituée par le MCP, reste active plus longtemps que la zone amont, notamment lorsque le fonctionnement du moteur est à l'arrêt, ou à faible puissance.

L'insert central 5 de matériau de stockage est maintenu par un bouchon isolant 8 qui permet en outre de boucher le trou nécessaire à l'introduction de l'insert en MCP lors de la fabrication et de limiter les échanges thermiques avec l'air présent en aval du catalyseur ou par une forme adéquate réalisée directement dans le pain catalytique.

Dans le deuxième cas B (figure 1B), le matériau de stockage est présent sous forme d'un insert 9, qui peut -être cylindrique creux ou plein, ici en forme d'anneau au sein du pain catalytique dans la zone avale.

Cet insert en anneau couvre au moins en partie la partie avale du catalyseur. Un anneau d'isolant 10 vient maintenir en place l'anneau de matériau de stockage et permet de boucher le volume cylindrique nécessaire à l'introduction et la mise en place de l'anneau de matériau de stockage dans le pain catalytique lors de la fabrication. Egalement, il permet de limiter les échanges thermiques avec l'air présent en aval du catalyseur..

Dans le cadre de l'invention, le terme "insert" signifie aussi bien un ensemble formé par un contenant à l'intérieur duquel est placé le MCP, et qui est logé dans le pain catalytique, que le MCP seul (sans contenant) directement positionné dans le pain catalytique.

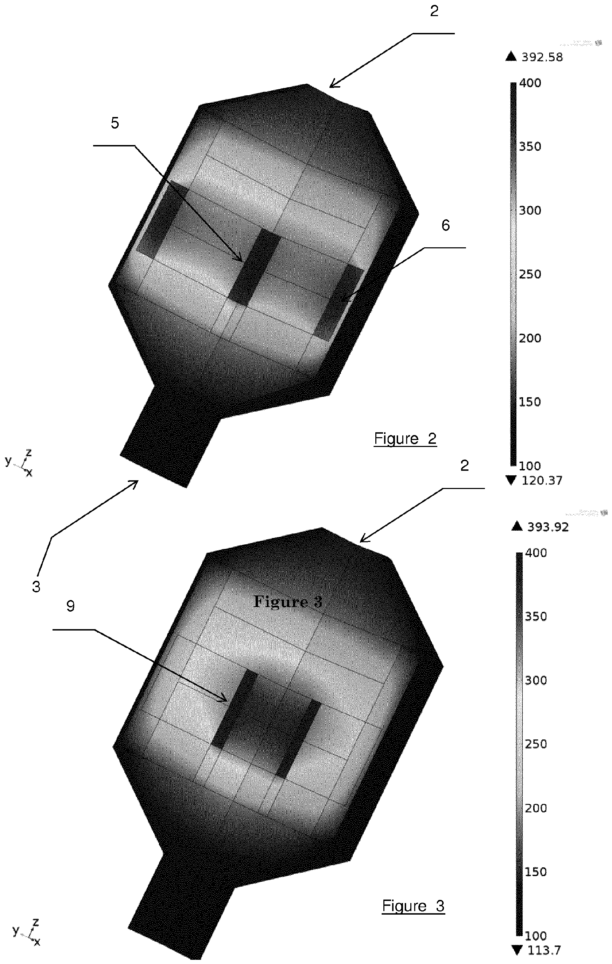

Pour évaluer le gain en inertie thermique de chaque système lors d'une phase d'arrêt moteur chaud, des calculs par éléments finis ont été réalisés. Le modèle thermique utilisé est calé sur un cas de référence pour lequel une large base de données expérimentales, est disponible. Les mesures réalisées à l'intérieur et à l'extérieur d'un catalyseur de propriétés physiques connus ont permis de caler les coefficients du modèle thermique de manière à reproduire fidèlement le comportement expérimental avec le modèle numérique. Les figures 2 et 3 montrent respectivement pour les cas A et B, une cartographie thermique estimée au bout de 1h25 de refroidissement après une mise en température de 820°C du matériau de stockage.

On note, pour ces deux cas de figure, la présence d'un foyer catalytique actif dans la partie avale du catalyseur, d'une température supérieure à 300°C, permettant une conversion des polluants à la prochaine utilisation du moteur thermique, alors que la partie en amont du catalyseur tend à se désamorcer (température inférieure à 300°C).

Les calculs ont été effectués avec un matériau MCP possédant une chaleur latente de changement d'état compris dans une fourchette de 100 J/g (MCP standard) jusqu'à 500 J/g (MCP haute performance).

En fonction du type de système de traitement des gaz d'échappement par catalyse, le matériau de stockage de la chaleur par changement de phase est déterminé en fonction de sa température de changement de phase. Pour optimiser l'efficacité du système, on adapte le niveau de température de changement de phase pour obtenir, en fonction des équipements, un stockage et une restitution de chaleur optimum, la température de changement d'état devant être supérieure à la température de light-off. Pour ce faire, on choisit la nature du matériau, ou on définit un mélange de matériaux différents par leur nature ou leurs caractéristiques thermiques.

Le matériau de stockage pourra être aussi un matériau sans changement d'état (stockage de chaleur uniquement sous forme sensible), dont la capacité calorifique est supérieure à celle du substrat catalytique.

## Revendications

1. Système catalytique de traitement des gaz d'échappement d'un véhicule, comportant une enveloppe (1) logeant un pain catalytique (4) dans lequel circulent lesdits gaz entre une entrée (2) et une sortie (3), ledit système comportant au moins un insert (5, 9) de matériaux de stockage de la chaleur dans une zone avale du pain, par rapport au sens de circulation des gaz, l'insert étant sensiblement au centre de la zone avale, **caractérisé en ce que** ledit insert (5, 9) est maintenu par un bouchon isolant (8) ou un anneau isolant (10) pour boucher le trou nécessaire à l'introduction dudit insert (5,9) lors de la fabrication et pour limiter les échanges thermiques en aval du pain catalytique (4).

2. Système selon la revendication 1, dans lequel ledit insert est cylindrique.

3. Système selon la revendication 2, dans lequel ledit insert est un cylindre plein.

4. Système selon la revendication 2, dans lequel ledit insert est tubulaire.

5. Système selon l'une des revendications 1 à 4, dans lequel un anneau (6) de matériaux de stockage de la chaleur se trouve à l'extérieur du pain dans ladite zone avale.

6. Système selon l'une des revendications précédentes, dans lequel ledit pain comporte une couche (7) de matériau isolant thermiquement sur l'extérieur.

7. Système selon l'une des revendications précédentes, dans lequel lesdits matériaux de stockage de la chaleur sont des matériaux à changement de phase (MCP).

8. Système selon l'une des revendications précédentes, dans lequel lesdits matériaux de stockage de la chaleur comportent un mélange de matériaux à changement de phase (MCP).

9. Système selon l'une des revendications 7, dans lequel lesdits matériaux de stockage de la chaleur est sous la forme de nitrate de potassium ((KNO₃).

10. Utilisation du système selon l'une des revendications précédentes, aux véhicules hybrides alternant de la motorisation en moteur à combustion avec de la motorisation à énergie alternative et réversible.

11. Utilisation du système selon la revendication 10, dans laquelle l'énergie alternative et réversible est électrique.

12. Utilisation du système selon l'une des revendications 10 ou 11, dans laquelle l'énergie alternative est rechargeable.

## Patentansprüche

1. Katalytisches Abgasnachbehandlungssystem eines Fahrzeugs, welches eine einen Katalysatorblock (4) aufnehmende Hülle (1) aufweist, in welcher die Gase zwischen einem Einlass (2) und einem Auslass (3) strömen, wobei das System wenigstens einen Einsatz (5, 9) aus Wärmespeichermaterialien in einem, bezogen auf die Strömungsrichtung der Gase, stromabwärtigen Bereich des Blocks aufweist, wobei sich der Einsatz im Wesentlichen in der Mitte des stromabwärtigen Bereichs befindet, **dadurch gekennzeichnet, dass** der Einsatz (5, 9) von einem isolierenden Stopfen (8) oder isolierenden Ring (10) zum Verschließen des zur Einführung des Einsatzes (5, 9) bei der Herstellung erforderlichen Lochs gehalten wird, um den Wärmeaustausch stromabwärts des Katalysatorblocks (4) zu begrenzen.

2. System nach Anspruch 1, wobei der Einsatz zylindrisch ist.

3. System nach Anspruch 2, wobei der Einsatz ein massiver Zylinder ist.

4. System nach Anspruch 2, wobei der Einsatz rohrförmig ist.

5. System nach einem der Ansprüche 1 bis 4, wobei sich ein Ring (6) aus Wärmespeichermaterialien außerhalb des Blocks in dem stromabwärtigen Bereich befindet.

6. System nach einem der vorhergehenden Ansprüche, wobei der Block eine Schicht (7) aus thermisch isolierendem Material auf der Außenseite aufweist.

7. System nach einem der vorhergehenden Ansprüche, wobei die Wärmespeichermaterialien Phasenwechselmaterialien (PCM) sind.

8. System nach einem der vorhergehenden Ansprüche, wobei die Wärmespeichermaterialien eine Mischung von Phasenwechselmaterialien (PCM) umfassen.

9. System nach einem der Ansprüche 7, wobei die Wärmespeichermaterialien in der Form von Kaliumnitrat (KNO₃) vorliegt.

10. Verwendung des Systems nach einem der vorhergehenden Ansprüche bei Hybridfahrzeugen, die zwischen Antrieb mit Verbrennungsmotor und Antrieb mit alternativer und reversibler Energie wechseln.

11. Verwendung des Systems nach Anspruch 10, wobei die alternative und reversible Energie elektrische Energie ist.

12. Verwendung des Systems nach einem der Ansprüche 10 oder 11, wobei die alternative Energie nachladbar ist.

## Claims

1. Catalytic system for treating exhaust gases of a vehicle, having a casing (1) accommodating a block of catalyst (4) through which said gases circulate between an inlet (2) and an outlet (3), said system having at least one insert (5, 9) made of heat storage materials in a downstream zone of the block, with respect to the direction of circulation of the gases, the insert being substantially at the centre of the downstream zone, **characterized in that** said insert (5, 9) is held by an insulating plug (8) or an insulating ring (10) for plugging the hole necessary for the introduction of said insert (5, 9) during manufacture and to limit exchanges of heat downstream of the block of catalyst (4) .

2. System according to Claim 1, wherein said insert is cylindrical.

3. System according to Claim 2, wherein said insert is a solid cylinder.

4. System according to Claim 2, wherein said insert is tubular.

5. System according to one of Claims 1 to 4, wherein a ring (6) of heat storage material is located outside the block in said downstream zone.

6. System according to one of the preceding claims, wherein said block has a layer (7) made of thermally insulating material on the outside.

7. System according to one of the preceding claims, wherein said heat storage materials are phase change materials (PCM).

8. System according to one of the preceding claims, wherein said heat storage materials comprise a mixture of phase change materials (PCM).

9. System according to one of Claims 7, wherein said heat storage materials is in the form of potassium nitrate (KNO₃) .

10. Use of the system according to one of the preceding claims in hybrid vehicles in which propulsion by way of a combustion engine alternates with propulsion by way of alternative and reversible energy.

11. Use of the system according to Claim 10, wherein the alternative and reversible energy is electric.

12. Use of the system according to either of Claims 10 and 11, wherein the alternative energy is rechargeable.
